# EUROPÄISCHE PATENTSCHRIFT

(11) **EP 2 470 761 B1**
(45) Veröffentlichungstag und Bekanntmachung des Hinweises auf die Patenterteilung: **24.01.2018**
(21) Anmeldenummer: 10740631.6
(22) Anmeldetag: 04.08.2010
(51) Int. Cl.: F02B 29/04, F28F 9/00, F02M 26/32, F28D 7/16

(54) **GASKÜHLER FÜR EINEN VERBRENNUNGSMOTOR**
GAS COOLER FOR AN INTERNAL COMBUSTION ENGINE
REFROIDISSEUR DE GAZ POUR MOTEUR À COMBUSTION INTERNE

(30) Priorität: 26.08.2009 DE 102009038592
(43) Veröffentlichungstag der Anmeldung: 04.07.2012
(73) Patentinhaber: MAHLE Behr GmbH & Co. KG, 70469 Stuttgart (DE)
(72) Erfinder: GHIANI, Franco, 74321 Bietigheim-Bissingen (DE)
(74) Vertreter: Grauel, Andreas
(86) Internationale Anmeldenummer: PCT/EP2010/061375
(87) Internationale Veröffentlichungsnummer: WO 2011/023516

(56) Entgegenhaltungen:
- EP-A1- 1 830 048
- EP-A2- 0 578 916
- EP-A2- 1 707 896
- WO-A1-03/091650
- US-A1- 2003 131 977
- US-A1- 2005 061 026

## Beschreibung

Die Erfindung betrifft einen Gaskühler für einen Verbrennungsmotor, nach dem Oberbegriff des Anspruchs 1.

Aus der Praxis des Kraftfahrzeugbaus sind sogenannte indirekte Ladeluftkühler bekannt, die einen kühlmitteldurchströmten Wärmetauscher umfassen, der durch eine Öffnung in einen Ladeluftkanal eingeschoben ist. Der Wärmetauscher durchsetzt dabei den Ladeluftkanal und wird von der Ladeluft durchströmt. Die EP 1 830 048 A1 offenbart einen Ladeluftkühler nach dem Oberbegriff von Anspruch 1.

Es ist die Aufgabe der Erfindung, einen Gaskühler für einen Verbrennungsmotor anzugeben, dessen Wärmetauscher besonders einfach montierbar ist.

Diese Aufgabe wird für einen eingangs genannten Gaskühler erfindungsgemäß mit den kennzeichnenden Merkmalen des Anspruchs 1 gelöst. Durch die miteinander verkämmenden Profile an dem Wärmetauscher und an dem Gaskanal wird ein genau positioniertes und geführtes Einschieben des Wärmetauschers ermöglicht. Zudem kann über die Profile zugleich eine gute Abdichtung gegen Leckströme in den Randbereichen des Wärmetauschers erreicht werden.

Unter einem Gasstrom im Sinne der Erfindung ist dabei jedes dem Verbrennungsmotor zugeführte Gas zu verstehen, insbesondere Ladeluft, rückgeführtes Abgas oder ein Gemisch aus Abgas und Ladeluft. Der Gaskanal kann dabei je nach vorgesehenen Temperaturen und Drücken aus Kunststoff oder Metall, zum Beispiel Aluminium, bestehen. Insofern vorliegend von einem Gaskühler die Rede ist, schließt dies nicht Betriebsarten aus, bei denen der Wärmetauscher zum Aufheizen des Gases Verwendung findet.

Bei einer bevorzugten Ausführungsform der Erfindung ist der Wärmetauscher als verlöteter Stapel von Flachrohren ausgebildet, In besonders bevorzugter Detailgestaltung ist dabei das erste Profil an einem endseitig des Stapels verlöteten Seitenteil ausgeformt. Solche Seitenteile können etwa aus Aluminiumblechen bestehen und sind oft als einen Flachrohrstapel abschließende Bleche vorgesehen, zum Beispiel zum Schutz der meist dünnwandigen äußeren Flachrohre. Durch einfache Profilierung bzw. Umformung eines solchen Seitenteils kann somit ein erstes Profil im Sinne der Erfindung bereitgestellt werden.

Bei einer möglichen Ausführungsform der Erfindung münden die Flachrohre beidseitig in jeweils einem Sammler, so dass auf einfache Weise eine Umlenkung des Fluids oder auch eine Auslegung als I-Flow-Tauscher möglich ist. Bei einer vorteilhaften Detailgestaltung ist ein in der Einschubrichtung vorderer Sammler an einer der seitlichen Öffnung gegenüberliegenden, zweiten Öffnung des Gaskanals abgestützt. Insbesondere kann dabei zumindest ein Anschluss für das Fluid an dem vorderen Sammler ausgebildet sein. Insgesamt wird hierdurch eine große Flexibilität bei der Auslegung des Wärmetauschers bezüglich der Lage der Fluidanschlüsse und/oder der Auslegung des Durchströmungstyps (I-Flow oder U-Flow) erzielt.

Bei einer hierzu alternativen Ausgestaltung hat der Wärmetauscher nur einen Sammler, wobei eine Umlenkung des Fluids jeweils innerhalb der Flachrohre erfolgt. Bei einer solchen Ausführung, die mit besonders wenigen Bauteilen auskommt, können die dem Sammler gegenüberliegenden Enden der Flachrohre zur Vermeidung von Gas-Leckströmen in einer korrespondierenden Ausnehmung in dem Gaskanal aufgenommen sein.

Zur einfachen und kostengünstigen Verbindung von Wärmetauscher und Gaskanal kann ein Boden des Wärmetauschers eine randseitige, in bevorzugter Detailgestaltung U-förmige Profilierung aufweisen, wobei die Profilierung einen vorkragenden Rand der Öffnung des Gaskanals übergreift. In der Profilierung kann sich zudem ein Dichtmittel, zum Beispiel eine O-RingDichtung befinden.

Zur besonders gasdichten Führung und Dämpfung bzw. Abdichtung bei auftretenden Vibrationen ist in besonders bevorzugter Ausführungsform an zumindest einem der Profile, bevorzugt an dem zweiten Profil, eine elastische Dichtlippe zur Anlage an dem jeweils anderen Profil vorgesehen. Je nach Anforderungen kann die Dichtlippe entweder als einsetzbare Dichtung oder als einstückige Ausformung des Gaskanals ausgebildet sein. Im Fall der einstückigen Ausformung kann die Dichtlippe als ausreichend dünne Fahne des Gaskanals ausgeformt sein, wobei der Gaskanal aus einem geeigneten Kunststoff besteht. Es kann sich aber auch um eine an den Gaskanal angepritzte Dichtlippe handeln, so dass zwar eine einstückige, aber nicht materialeinheitliche Ausformung gegeben ist.

Allgemein bevorzugt ist das zweite Profil in einem in Schwerkraftrichtung unteren Bereich des Gaskanals vorgesehen, wobei das zweite Profil einen Sumpf zur Aufnahme von Kondensat ausbildet. Hierdurch werden mehrere Funktionen in dem zweiten Profil zusammengefasst.

Bei bevorzugten Ausführungsformen der Erfindung ist der Wärmetauscher durch formschlüssige Verrastung an dem Gaskanal festlegbar, in besonders bevorzugter Ausführung mittels Krallen, Wellschlitzbördelung oder Einrast-Fügetechnik. Allgemein hat die Festlegung durch Verrastung den Vorteil, dass eine Montage einfach und sicher ist sowie einen guten Wartungszugang zu dem Wärmetauscher erlaubt.

Bei einer möglichen Weiterbildung der Erfindung ist der Gaskanal als Modul eines Baukastensystems aus standardisierten Teilen ausgebildet. Auf diese Weise können größere Stückzahlen des gleichen Moduls hergestellt werden. Der erfindungsgemäße Gaskühler kann dabei zudem ein weiteres Modul des Baukastensystems umfassen. Dabei kann es sich bevorzugt um einen weiteren, insbesondere baugleichen Gaskühler handeln, so dass unterschiedliche Kühlleistungen mittels desselben Moduls bereitgestellt werden. Alternativ dazu kann das weitere Modul auch ein Gas-Eintrittsgehäuse oder ein Ansaugrohr des Verbrennungsmotors sein.

Alternativ oder ergänzend ist der Gaskanal als Ansaugrohr des Verbrennungsmotors ausgebildet, so dass ein Anschluss an Einlasskanäle des Motors sowie die indirekte Gaskühlung als bauliche Einheit gegeben sind.

Weitere Vorteile und Merkmale der Erfindung ergeben sich aus den nachfolgend beschriebenen Ausführungsbeispielen sowie aus den abhängigen Ansprüchen.

Nachfolgend werden mehrere Ausführungsbeispiele der Erfindung beschrieben und anhand der anliegenden Zeichnungen näher erläutert.
- Fig. 1: zeigt zwei räumliche Ansichten eines ersten Ausführungsbeispiels eines erfindungsgemäßen Gaskühlers.
- Fig. 2: zeigt zwei räumliche Ansichten eines Wärmetauschers des Gaskühlers aus Fig. 1.
- Fig. 3: zeigt eine Schnittansicht durch den Gaskühler aus Fig. 1.
- Fig. 4: zeigt eine räumliche Ansicht eines weiteren Ausführungsbeispiels der Erfindung.
- Fig.5: zeigt zwei räumliche Ansichten eines zweiten Ausführungsbeispiels eines erfindungsgemäßen Gaskühlers.
- Fig. 6: zeigt eine räumliche Ansicht des Gaskühlers aus Fig. 5 mit teilweise herausgezogenem Wärmetauscher.
- Fig. 7: zeigt den Wärmetauscher aus Fig. 6.
- Fig. 8: zeigt eine aufgeschnittene räumliche Teilansicht des Gaskühlers aus Fig. 5.
- Fig. 9: zeigt eine weitere aufgeschnittene räumliche Teilansicht des Gaskühlers aus Fig. 5.
- Fig. 10: zeigt eine Detaildarstellung eines Endes von Flachrohren des Wärmetauschers aus Fig. 7

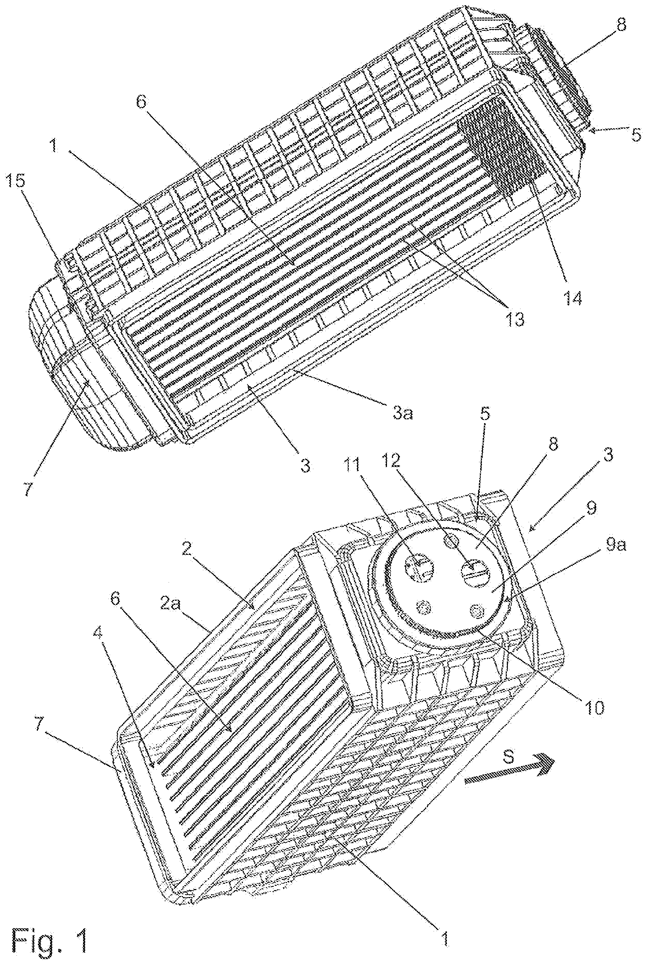

Der in Fig. 1 gezeigte Gaskühler umfasst einen als Gehäuse ausgeformten Gaskanal 1 mit einer Eintrittsöffnung 2 und einer Austrittsöffnung 3 zur Durchströmung mit einem Gasstrom in einer Strömungsrichtung S. Bei dem Gas handelt es sich um durch einen Turbolader komprimierte und mit rückgeführtem Abgas vermischte Ladeluft zur Zuführung zu einem (nicht dargestellten) Verbrennungsmotor.

In dem Gaskanal 1 ist an einer ersten parallel zu der Strömungsrichtung S verlaufenden Seitenwand eine Öffnung 4 vorgesehen, durch die ein Wärmetauscher 6 quer zu der Strömungsrichtung in den Gaskanal 1 eingeschoben ist. Der Wärmetauscher 6 durchgreift den Gaskanal 1 auf seiner gesamten Breite. Mit einem ersten Sammler 7 ist er im Bereich der Öffnung 4 festgelegt und ragt mit einem vorderen endseitigen Sammler 8 in bzw. durch eine zweite Öffnung 5 des Gaskanals, die der ersten Öffnung 4 gegenüberliegt.

Der vordere Sammler 8 hat einen Kasten 9 mit vorliegend kreisrunder Abstufung 9a, an der eine Ringdichtung 10 anliegt, mittels derer der Sammler 8 gegen die ebenfalls kreisrunde zweite Öffnung 5 abgestützt ist.

In dem vorderen Sammler 8 sind zwei Anschlüsse 11, 12 zur Zuführung und Abführung eines wärmeführenden Fluids des Wärmetauschers, zum Beispiel Kühlmittel eines Niedertemperatur-Kühlkreislaufs, vorgesehen. Die Anschlüsse sind im vorliegenden Beispiel nur als kreisrunde Löcher ausgebildet, in die z.B. Kunststoffstutzen eingesetzt werden können. Es können aber auch angelötete, angeschweißte oder sonst wie befestigte Anschlüsse beliebiger Bauform vorgesehen sein.

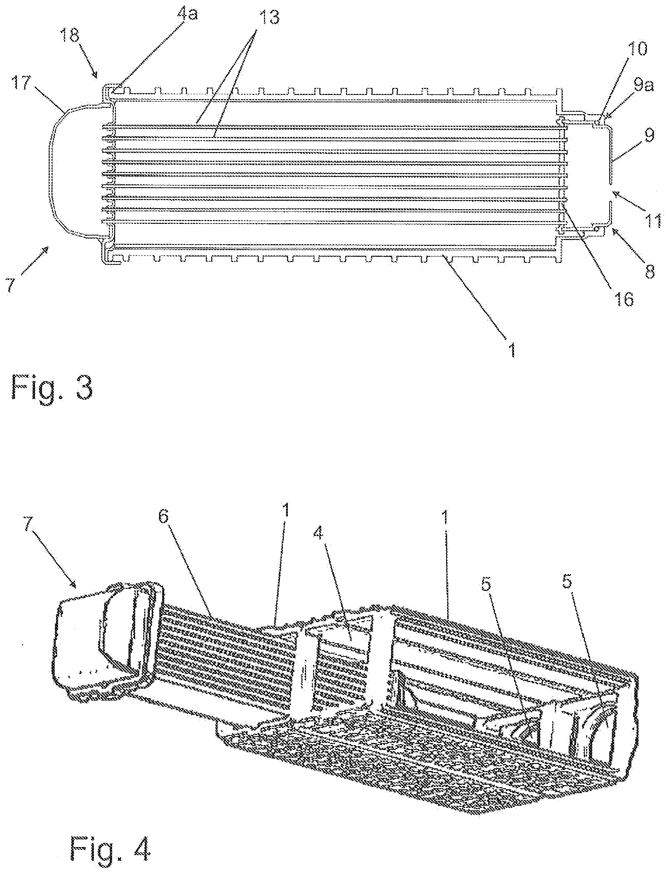

Der Wärmetauscher 6 besteht aus einem verlöteten Block aus Flachrohren 13, zwischen denen jeweils Lagen von Rippen 14 (in Fig. 4 nur teilweise dargestellt) flächig verlötet sind und die endseitig jeweils in Durchzügen von Böden 15, 16 der Sammler 7, 8 münden.

Der erste, hintere Sammler 7 hat einen haubenförmigen Kasten 17, der an einer Innenseite einer aufkragenden Profilierung 18 des Bodens 15 verlötet ist. Die Profilierung 18 ist als doppelte Umbiegung ausgebildet, so dass ein äußerer Bereich der Profilierung 18 als in Einschubrichtung offenes U ausgeformt ist und einen vorkragenden Rand 4a der Öffnung 4 übergreift. In diese Profilierung kann zum Beispiel eine Dichtung eingelegt sein.

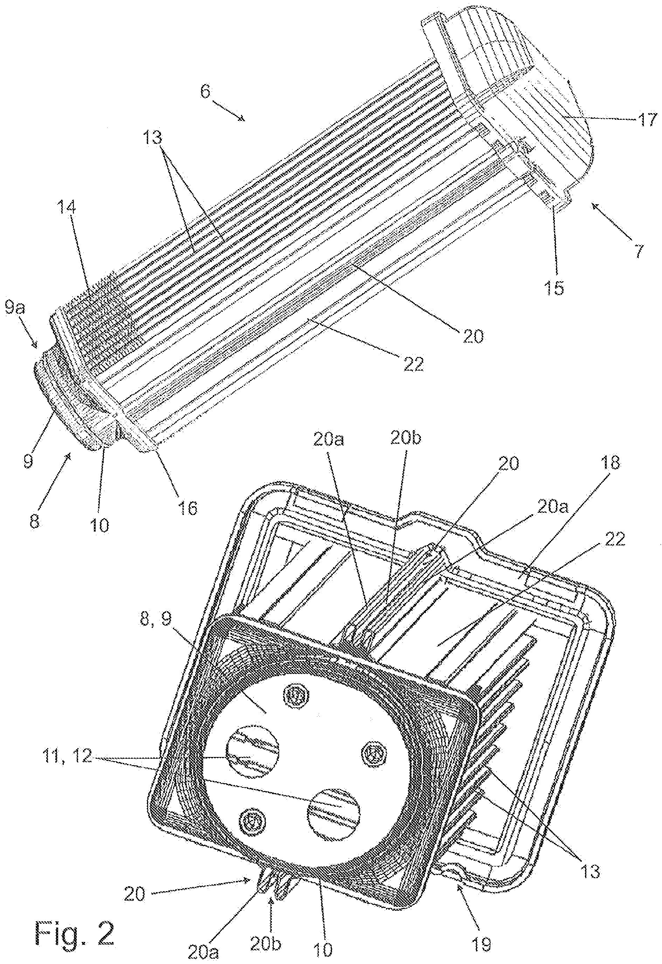

Die Profilierung 18 hat zudem Vorsprünge 19 (siehe Fig. 2) nach Art einer Wellschlitz-Bördelung, mittels derer eine Verrastung an der Öffnung 4 des Gaskanals 1 erzielt wird. Dabei hinterschneiden die Vorsprünge 19 eine Kante des Randes 4a der Öffnung 4.

Zur Verbesserung der Montage und Abdichtung ist an dem Wärmetauscher ein erstes Profil 20 und an dem Gaskanal 1 ein damit verkämmendes zweites Profil 21 vorgesehen. Die Profile 20, 21 erstrecken sich dabei jeweils in der Einschubrichtung des Wärmetauschers, vorliegend senkrecht zu der Strömungsrichtung S das Gasstroms.

Das erste Profil 20 ist als mehrfache Faltung eines mittleren Bereichs eines Aluminiumblechs ausgebildet, das ein verlötetes Seitenteil 22 des Stapels von Flachrohren 13 ausbildet. Im Querschnitt umfasst das erste Profil 20 zwei benachbarte, vorstehende Wülste 20a mit einer dazwischen liegenden Rille bzw. Sicke 20b (siehe Fig. 2).

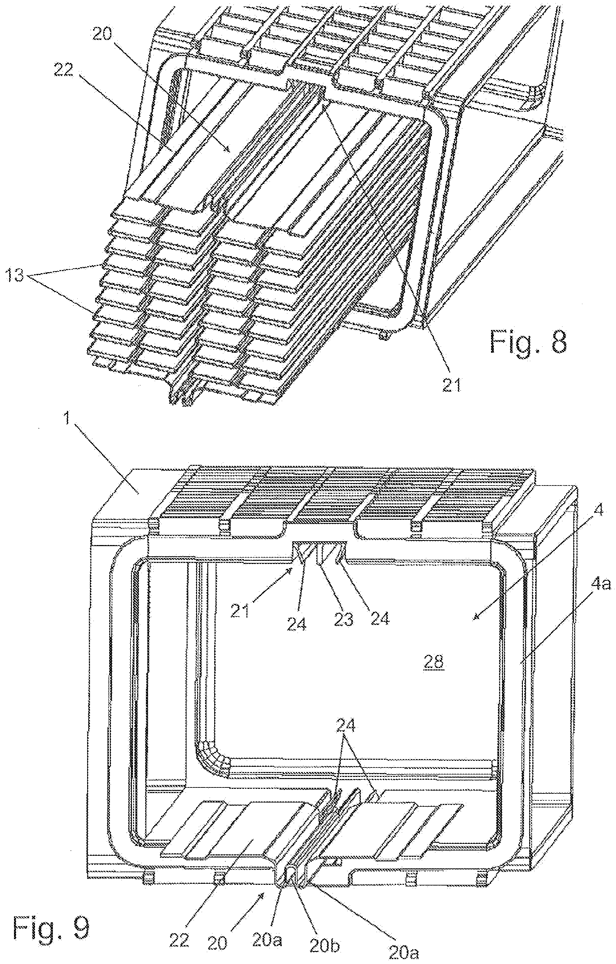

Das zweite Profil 21 ist in dem Gaskanal 1 ausgebildet, der als Spritzgussteil aus einem Kunststoff hergestellt ist. Hierzu wird auf Fig. 8 und Fig. 9 des zweiten Ausführungsbeispiels verwiesen, das bezüglich der Ausgestaltung der Profile 20, 21 mit dem ersten Ausführungsbeispiel identisch ist. Während in Fig. 8 der gesamt Stapel aus Flachrohren 13 und Seitenteilen 22 im Zuge des Einschiebens in den Gaskanal gezeigt ist, ist in Fig. 9 zur Veranschaulichung nur im unteren Bereich ein Ausschnitt des unteren Seitenteils dargestellt.

Das zweite Profil 21 ist als im Querschnitt rechteckige, nutförmige Ausnehmung in der Seitenwand des Gaskanals 1 ausgeformt. In der Mitte der rechteckigen Nut 21 ragt ein zentraler Steg 23 vor, der in die Sicke 20b des ersten Profils 20 eingreift. Auf diese Weise sind die beiden Profile 20, 21 miteinander verkämmt.

Zur spielfreien Führung und verbesserten Abdichtung gegen seitliche Leckströme des Gases sind in der Nut zudem zwei elastische Dichttippen 24 vorgesehen, die an den äußeren Flanken der beiden Wülste 20a anliegen. Die Dichtlippen 24 und der Steg 23 sind materialeinheitlich einstöckig mit dem Gaskanal ausgeformt. Es versteht sich, dass es sich bei den Dichtlippen oder einer Einheit aus Dichtlippen und Steg auch um eine eingesetzte Dichtung aus einem elastischen Material handeln kann.

Bei den vorliegenden Ausführungsbeispielen sind an jeder der gegenüberliegenden Seitenwänden jeweils ein Paar von kämmenden Profilen 20, 21 vorhanden, so dass auf jeder Seite eine Führung und Abdichtung beim Einsetzen des Wärmetauschers erfolgt. Bezüglich der Orientierung im Raum ist dabei eines der nutförmigen zweiten Profile 21 jeweils an einer bezüglich der Schwerkraft unteren Seitenwand des Gaskanals 1 angeordnet, so dass die Nut zugleich als Sumpf zur Sammlung von etwa an dem Wärmetauscher anfallenden Kondensat dient.

Es können im Bereich des zweiten Profils entsprechende Öffnungen zur Abführung oder Absaugung des Kondensats vorgesehen sein (nicht gezeigt). Je nach Auslegung und Betrieb des Gaskühlers ist eine solche externe Kondensatabführung aber nicht notwendig, da das Kondensat auch wieder in den Gasstrom verdampfen kann.

Der Gaskühler 1, 6 ist als Modul eines Baukastensystems ausgelegt. Fig. 4 zeigt ein weiteres Ausführungsbeispiel, bei dem ein erfindungsgemäßer Gaskühler insgesamt aus zwei identischen Gaskühlern 1, 6 des vorstehenden Ausführungsbeispiels besteht, die in Strömungsrichtung S aneinandergesetzt sind. Aus Gründen der Veranschaulichung ist nur in einem der Gaskanäle 1 ein Wärmetauscher 6 teilweise eingeschoben. Zur einfachen Kombination der Module 1 sind die Eintritts- und Austrittsöffnungen 2, 3 eines jeweiligen Gaskanals standardisiert ausgeführt, zum Beispiel mit vorkragenden Rändern 2a, 3a nach Art von Nut 3a und Feder 2a (siehe Fig. 1).

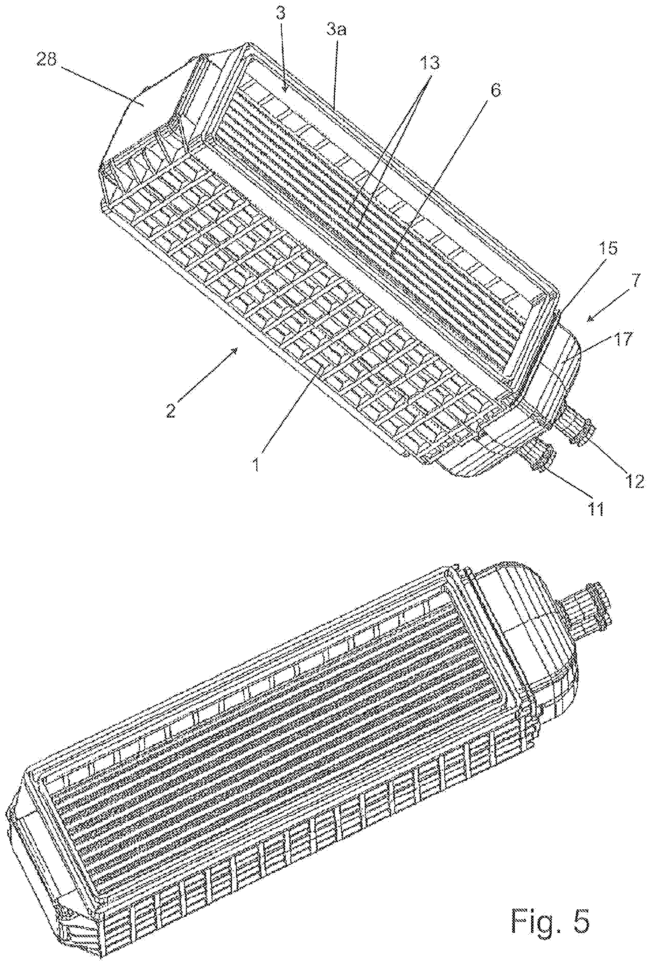

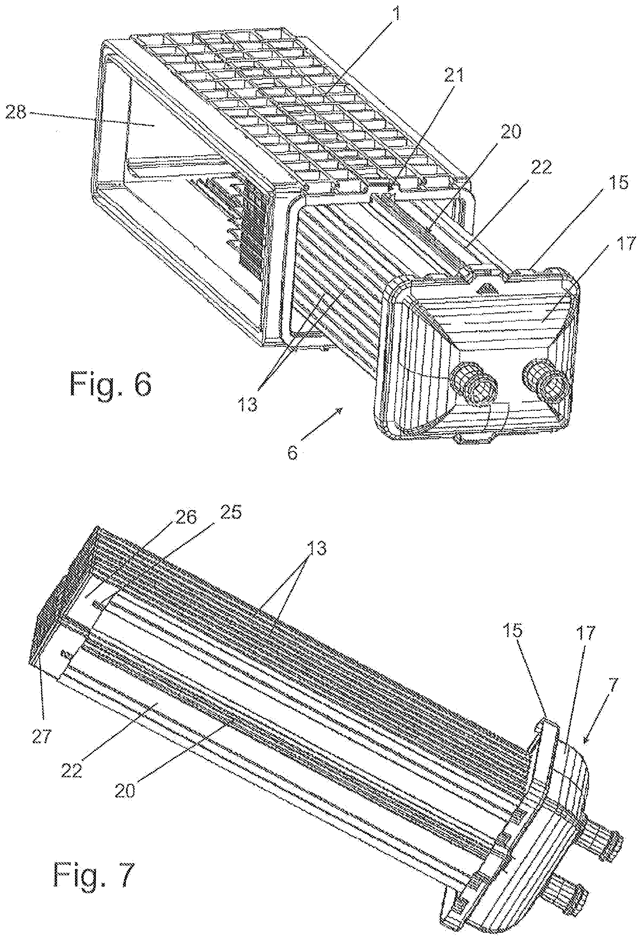

Fig. 5 bis Fig. 9 zeigen ein weiteres Ausführungsbeispiel der Erfindung, das sich von dem ersten Ausführungsbeispiel durch die Konstruktion des Wärmetauschers 6 unterscheidet. Im Unterschied zum ersten Ausführungsbeispiel hat der Wärmetauscher 6 nur einen einzigen Sammler 7, der im Wesentlichen wie der hintere, erste Sammler 7 nach Fig. 1 ausgebildet ist.

Allerdings sind in dem Sammler 7 des zweiten Ausführungsbeispiels die beiden Anschlüsse 11, 12 für das Fluid vorgesehen, so dass innerhalb des Sammlers zudem eine Trennwand (nicht dargestellt) zur Aufteilung des Sammlers in einen hinführenden und einen rückführenden Kanal vorgesehen ist.

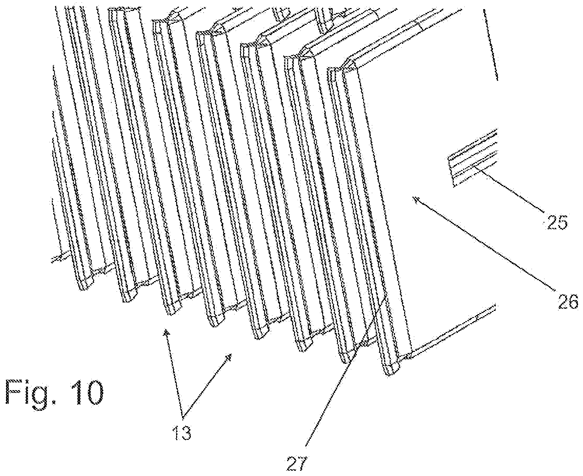

Eine Umlenkung des wie im ersten Beispiel als U-flow-Tauscher ausgebildeten Wärmetauschers 6 erfolgt in jedem einzelnen der Flachrohre 13 jeweils an seinem dem Sammler 7 gegenüberliegenden Ende. Hierzu (siehe insbesondere Fig. 10) haben die Flachrohre 13 eine mittige Trennung in zumindest zwei parallele Kammern in Form einer Einkerbung 25. Die Einkerbung 25 beginnt bei dem Boden 15 des Sammlers 7 und endet vor einem endseitigen Umkehrbereich 26, in dem das Fluid von dem hinführenden zum rückführenden Kanal strömt. Die Flachrohre 13 sind aus einem quasi-endlosen Profil gefertigt, wobei ein endseitiger Verschluss durch eine verschließende Einkerbung 27 erfolgt.

Das in Fig. 10 gezeigte Ende des Stapels von Flachrohren des Wärmetauschers 6 ist in einer geschlossenen Ausnehmung 28 des Gaskanals 1 des zweiten Ausführungsbeispiels aufgenommen und dort gegebenenfalls an geeigneten Strukturen abgestützt. Im Unterschied zu dem ersten Ausführungsbeispie! hat der Gaskanal keine zweite Öffnung (Öffnung 5 im ersten Ausführungsbeispiel), die der ersten Öffnung 4 gegenüberliegt.

Hinsichtlich der Festlegung der Verrastung bzw. Festlegung des Wärmetauschers 6 und der Ausformung des Bodens 15 sowie der Ausformung der ersten und zweiten Profile 20, 21 sind die Ausführungsformen nach Fig. 1 und nach Fig. 5 identisch.

Bei jeden der Ausführungsbeispiele ist der Wärmetauscher 6 jeweils als insgesamt in einem Lötofen verlöteter Block aus Flachrohren 13, Rippen 14 und (zumindest einem) Sammler 7 mit Kasten 17 und Boden 15 hergestellt. Im Fall des Ausführungsbeispiels nach Fig. 1 umfasst dieser verlötete Block zudem noch den zweiten Sammler 8.

Es versteht sich, dass die einzelnen Merkmale der verschiedenen Ausführungsbeispiele je nach Anforderungen sinnvoll miteinander kombiniert werden können.

## Patentansprüche

1. Ladeluftkühler für einen Verbrennungsmotor, umfassend einen Ladeluftkanal (1) zur Durchströmung mit einem dem Verbrennungsmotor zugeführten Ladeluftstrom in einer Strömungsrichtung (S), und einen in den Ladeluftkanal (1) durch eine seitliche Öffnung (4) in einer Einschubrichtung eingesetzten Wärmetauscher (6), wobei der Wärmetauscher von einem Fluid zur Kühlung des Ladeluftstroms durchströmbar ist, wobei an zumindest einer Seite des Wärmetauschers (6) ein in der Einschubrichtung verlaufendes erstes Profil (20) ausgebildet ist, das mit einem an dem Ladeluftkanal (1) vorgesehenen zweiten Profil (21) verkämmt, der Wärmetauscher durchsetzt den Ladeluftkanal und wird von der Ladeluft durchströmt, **dadurch gekennzeichnet, dass** der Wärmetauscher (6) als verlöteter Stapel von Flachrohren (13) ausgebildet ist, wobei das erste Profil (20) an einem endseitig des Stapels (13) verlöteten Seitenteil (22) ausgeformt ist.

2. Ladeluftkühler nach Anspruch 1, **dadurch gekennzeichnet, dass** die Flachrohre (13) beidseitig in jeweils einem Sammler (7, 8) münden, wobei insbesondere ein in der Einschubrichtung vorderer Sammler (8) an einer der seitlichen Öffnung (4) gegenüberliegenden, zweiten Öffnung (5) des Ladeluftkanals (1) abgestützt ist.

3. Ladeluftkühler nach Anspruch 2, **dadurch gekennzeichnet, dass** zumindest ein Anschluss (11, 12) für das Fluid an dem vorderen Sammler (8) ausgebildet ist.

4. Ladeluftkühler nach Anspruch 1, **dadurch gekennzeichnet, dass** der Wärmetauscher (6) nur einen Sammler (7) aufweist, wobei eine Umlenkung des Fluids jeweils innerhalb der Flachrohre (13) erfolgt.

5. Ladeluftkühler nach einem der Ansprüche 1 bis 4, **dadurch gekennzeichnet, dass** ein Boden (15) des Wärmetauschers eine randseitige, insbesondere U-förmige Profilierung (18) aufweist, wobei die Profilierung (18) einen vorkragenden Rand (4a) der Öffnung (4) des Ladeluftkanals (1) übergreift.

6. Ladeluftkühler nach einem der vorhergehenden Ansprüche, **dadurch gekennzeichnet, dass** an zumindest einem der Profile (20, 21), insbesondere dem zweiten Profil (21), eine elastische Dichtlippe (24) zur Anlage an dem jeweils anderen Profil (20, 21) vorgesehen ist.

7. Ladeluftkühler nach Anspruch 6, **dadurch gekennzeichnet, dass** die Dichtlippe (24) entweder als einsetzbare Dichtung oder als einstückige Ausformung des Ladeluftkanals (1) ausgebildet ist.

8. Ladeluftkühler nach einem der vorhergehenden Ansprüche, **dadurch gekennzeichnet, dass** das zweite Profil (21) in einem in Schwerkraftrichtung unteren Bereich des Ladeluftkanals (1) vorgesehen ist, so dass das zweite Profil (21) einen Sumpf zur Aufnahme von Kondensat ausbildet.

9. Ladeluftkühler nach einem der vorhergehenden Ansprüche, **dadurch gekennzeichnet, dass** der Wärmetauscher (6) durch formschlüssige Verrastung an dem Ladeluftkanal (1) festlegbar ist, insbesondere mittels Krallen, Wellschlitzbördelung (19) oder Einrast-Fügetechnik.

10. Ladeluftkühler nach einem der vorhergehenden Ansprüche, **dadurch gekennzeichnet, dass** der Ladeluftkanal (1) als Modul eines Baukastensystems aus standardisierten Teilen ausgebildet ist.

11. Ladeluftkühler nach Anspruch 10, ferner umfassend ein weiteres Modul des Baukastensystems, wobei insbesondere das weitere Modul als weiterer, insbesondere baugleicher Ladeluftkühler (1, 6), als Ladeluft-Eintrittsgehäuse oder als Ansaugrohr des Verbrennungsmotors ausgebildet ist.

12. Ladeluftkühler nach einem der vorhergehenden Ansprüche, **dadurch gekennzeichnet, dass** der Ladeluftkanal (1) als Ansaugrohr des Verbrennungsmotors ausgebildet ist.

## Claims

1. A charge air cooler for an internal combustion engine, comprising
a charge air duct (1) for the passage in a flow direction (S) of a charge air flow that is supplied to the internal combustion engine, and a heat exchanger (6) that is placed in the charge air duct (1) in an insertion direction through a lateral opening (4), wherein a fluid for cooling the charge air flow can flow through the heat exchanger, wherein a first profile (20) extending in the insertion direction is formed on at least one side of the heat exchanger (6) and meshes with a second profile (21) provided on the charge air duct (1), wherein the heat exchanger passes through the charge air duct and is flowed through by the charge air, **characterised in that** the heat exchanger (6) is designed as a soldered stack of flat tubes (13), wherein the first profile (20) is formed on a side part (22) soldered to the end of the stack (13).

2. The charge air cooler according to claim 1, **characterised in that** the flat tubes (13) open into one header (7, 8) at each of their two ends, wherein, in particular, a front header (8) in the insertion direction is supported on a second opening (5) of the charge air duct (1) located opposite the lateral opening (4).

3. The charge air cooler according to claim 2, **characterised in that** at least one connection (11, 12) for the fluid is implemented on the front header (8) .

4. The charge air cooler according to claim 1, **characterised in that** the heat exchanger (6) has only one header (7), wherein a redirection of the fluid takes place in each case within the flat tubes (13).

5. The charge air cooler according to one of claims 1 through 4, **characterised in that** a base (15) of the heat exchanger has a profiling (18) at its edge that in particular is U-shaped, wherein the profiling (18) engages around a protruding edge (4a) of the opening (4) of the charge air duct (1).

6. The charge air cooler according to one of the preceding claims, **characterised in that** an elastic sealing lip (24) is provided on at least one of the profiles (20, 21), in particular on the second profile (21), to make contact with the respective other profile (20, 21).

7. The charge air cooler according to claim 6, **characterised in that** the sealing lip (24) is implemented either as an insertable seal or as a single-piece forming of the charge air duct (1).

8. The charge air cooler according to one of the preceding claims, **characterised in that** the second profile (21) is provided in a lower region of the charge air duct (1) in the direction of gravity, so that the second profile (21) forms a sump for receiving condensate.

9. The charge air cooler according to one of the preceding claims, **characterised in that** the heat exchanger (6) can be secured on the charge air duct (1) by positive latching, in particular by means of claws, a corrugated slot flange (19), or snap-in fastening techniques.

10. The charge air cooler according to one of the preceding claims, **characterised in that** the charge air duct (1) is designed as a module of a modular system composed of standardised parts.

11. The charge air cooler according to claim 10, further comprising an additional module of the modular system, wherein the additional module is implemented, in particular, as another charge air cooler (1, 6), in particular of identical design, as a charge air intake housing or as an intake manifold of the internal combustion engine.

12. The charge air cooler according to one of the preceding claims, **characterised in that** the charge air duct (1) is implemented as an intake manifold of the internal combustion engine.

## Revendications

1. Refroidisseur d'air de suralimentation pour un moteur à combustion interne, comprenant un conduit d'air de suralimentation (1) servant à la circulation, suivant une direction d'écoulement (S), se produisant avec un flux d'air de suralimentation fourni au moteur à combustion interne, et comprenant un échangeur de chaleur (6) monté suivant une direction d'insertion, en passant par une ouverture latérale (4) placée dans le conduit d'air de suralimentation (1), où l'échangeur de chaleur est traversé par un fluide servant au refroidissement du flux d'air de suralimentation, où un premier profilé (20) s'étendant suivant la direction d'insertion est formé sur au moins un côté de l'échangeur de chaleur (6) lequel premier profilé est imbriqué avec un deuxième profilé (21) prévu sur le conduit d'air de suralimentation (1), où l'échangeur de chaleur traverse le conduit d'air de suralimentation et est traversé par l'air de suralimentation, **caractérisé en ce que** l'échangeur de chaleur (6) est configuré comme une pile brasée de tubes plats (13), où le premier profilé (20) est formé de façon saillante au niveau d'une partie latérale brasée (22), côté extrémité de la pile (13).

2. Refroidisseur d'air de suralimentation selon la revendication 1, **caractérisé en ce que** les tubes plats (13) débouchent, des deux côtés, respectivement dans un collecteur (7, 8), où en particulier un collecteur avant (8), par rapport à la direction d'insertion, vient en appui sur une deuxième ouverture (5) du conduit d'air de suralimentation (1), ladite deuxième ouverture étant placée à l'opposé de l'ouverture latérale (4).

3. Refroidisseur d'air de suralimentation selon la revendication 2, **caractérisé en ce qu'**au moins un raccordement (11, 12) pour le fluide est configuré au niveau du collecteur avant (8).

4. Refroidisseur d'air de suralimentation selon la revendication 1, **caractérisé en ce que** l'échangeur de chaleur (6) présente seulement un collecteur (7), où un retour de flux du fluide se produit à chaque fois à l'intérieur des tubes plats (13).

5. Refroidisseur d'air de suralimentation selon l'une quelconque des revendications 1 à 4, **caractérisé en ce qu'**un fond (15) de l'échangeur de chaleur présente, côté bordure, un profilage (18) en particulier en forme de U, où le profilage (18) chevauche un bord en saillie (4a) de l'ouverture (4) du conduit d'air de suralimentation (1).

6. Refroidisseur d'air de suralimentation selon l'une quelconque des revendications précédentes, **caractérisé en ce qu'**il est prévu, sur au moins l'un des profilés (20, 21), en particulier sur le deuxième profilé (21), une lèvre d'étanchéité élastique (24) venant à chaque fois en appui respectivement sur l'autre profilé (20, 21).

7. Refroidisseur d'air de suralimentation selon la revendication 6, **caractérisé en ce que** la lèvre d'étanchéité (24) est formée soit comme un joint d'étanchéité pouvant être inséré, soit comme une partie saillante - formée d'un seul tenant - du conduit d'air de suralimentation (1).

8. Refroidisseur d'air de suralimentation selon l'une quelconque des revendications précédentes, **caractérisé en ce que** le deuxième profilé (21) est prévu dans une zone inférieure - vue suivant le sens de la gravité - du conduit d'air de suralimentation (1), de sorte que le deuxième profilé (21) forme un réservoir servant à la récupération de condensat.

9. Refroidisseur d'air de suralimentation selon l'une quelconque des revendications précédentes, **caractérisé en ce que** l'échangeur de chaleur (6), qui peut être fixé sur le conduit d'air de suralimentation (1), par encliquetage obtenu par complémentarité de forme, peut être fixé en particulier au moyen de griffes, d'un sertissage avec bord rabattu à fente ondulée (19) ou au moyen d'une technique d'assemblage réalisé par encliquetage.

10. Refroidisseur d'air de suralimentation selon l'une quelconque des revendications précédentes, **caractérisé en ce que** le conduit d'air de suralimentation (1) est conçu, à partir de pièces standardisées, comme un module d'un système modulaire.

11. Refroidisseur d'air de suralimentation selon la revendication 10, comprenant en outre un autre module du système modulaire, où en particulier l'autre module est conçu comme un autre refroidisseur d'air de suralimentation (1, 6), en particulier de construction identique, conçu comme un carter d'entrée d'air de suralimentation, ou bien comme un conduit d'admission du moteur à combustion interne.

12. Refroidisseur d'air de suralimentation selon l'une quelconque des revendications précédentes, **caractérisé en ce que** le conduit d'air de suralimentation (1) est conçu comme un conduit d'admission du moteur à combustion interne.
